# FASCICULE DE BREVET EUROPEEN

(11) **EP 0 721 497 B1**
(45) Date de publication et mention de la délivrance du brevet: **26.08.1998**
(21) Numéro de dépôt: 94928383.2
(22) Date de dépôt: 20.09.1994
(51) Int. Cl.: C11D 3/43, C23G 5/028, B01D 12/00

(54) **COMPOSITIONS COMPRENANT DU 1,1,1,3,3-PENTAFLUOROBUTANE ET PROCEDE D'ELIMINATION D'EAU D'UNE SURFACE SOLIDE**
1,1,1,3,3- PENTAFLUOROBUTAN ENTHALTENDE MISCHUNGEN UND VERFAHREN VON WASSER VON EINER FESTEN OBERFLÄCHE
COMPOSITIONS COMPRISING 1,1,1,3,3-PENTAFLUOROBUTANE AND METHOD FOR THE REMOVAL OF WATER FROM A SOLID SURFACE

(30) Priorité: 29.09.1993 BE 9301018
(43) Date de publication de la demande: 17.07.1996
(73) Titulaire: SOLVAY (Société Anonyme), B-1050 Bruxelles (BE)
(72) Inventeur: BARTHELEMY, Pierre, B-1315 Pietrebais (BE); PAULUS, Mireille, B-1020 Bruxelles (BE)
(74) Mandataire: Jacques, Philippe
(86) Numéro de dépôt international: EP9403145
(87) Numéro de publication internationale: WO9509228

(56) Documents cités:
- DATABASE WPI Section Ch, Week 9331, Derwent Publications Ltd., London, GB; Class E19, AN 93-247650 & JP,A,5 168 805 (ASAHI GLASS CO LTD) 2 Juillet 1993 cité dans la demande
- DATABASE WPI Section Ch, Week 9332, Derwent Publications Ltd., London, GB; Class E19, AN 93-253064 & JP,A,5 171 190 (ASAHI GLASS CO LTD) 9 Juillet 1993
- DATABASE WPI Section Ch, Week 9331, Derwent Publications Ltd., London, GB; Class E19, AN 93-247656 & JP,A,5 168 811 (ASAHI GLASS CO LTD) 2 Juillet 1993
- DATABASE WPI Section Ch, Week 9331, Derwent Publications Ltd., London, GB; Class E19, AN 93-247650
- DATABASE WPI Section Ch, Week 9332, Derwent Publications Ltd., London, GB; Class E19, AN 93-253064
- DATABASE WPI Section Ch, Week 9331, Derwent Publications Ltd., London, GB; Class E19, AN 93-247656

## Description

La présente invention se rapporte à des compositions à base de 1,1,1,3,3-pentafluorobutane (HFC-365mfc) et à un procédé d'élimination d'eau d'une surface solide au moyen de ces compositions.

Dans les domaines de l'industrie électrique, électronique, optique et mécanique notamment, au cours de la production d'articles de haute précision, il peut arriver que certaines pièces de ces articles entrent, intentionnellement ou non, en contact avec de l'eau ou de l'humidité. Il s'agit par exemple de pièces de dispositifs d'affichage à cristaux liquides, de composants électroniques, de pièces d'horlogerie et de pièces d'optique, telles que des lentilles. L'eau peut adhérer à la surface de ces pièces et provoquer ensuite certains effets néfastes au cours des étapes ultérieures de leur mise en oeuvre ou altérer la qualité des articles dans lesquels ces pièces sont finalement incorporées.

Il est dès lors indispensable, pour de nombreuses pièces de précision, d'être complètement débarrassées de l'eau adhérant à leur surface, avant toute mise en oeuvre ultérieure. Cette opération d'élimination d'eau à la surface peut notamment être réalisée par déplacement de l'eau, au moyen d'un liquide organique dense, non miscible à l'eau et contenant éventuellement un agent tensioactif; à ce sujet, des compositions à base de 1,1,2-trichloro-1,2,2-trifluoroéthane (CFC-113) et d'agents tensioactifs ont été décrites dans le brevet US-A-4594177. Le CFC-113 fait cependant partie des chlorofluorocarbures complètement halogénés qui sont actuellement suspectés d'attaquer ou de dégrader l'ozone stratosphérique.

La demande de brevet européen EP-A-0512885 décrit une composition azéotropique à base de 1,1,1,3,3-pentafluorobutane et de méthanol pour le nettoyage, le dégraissage et le séchage de surfaces solides. Cette composition évite le désavantage précité des compositions à base de CFC-113. L'utilisation de cette composition connue pour le déplacement d'eau des surfaces solides pose toutefois des problèmes liés à la solubilité du méthanol dans l'eau; en effet, au cours d'utilisations successives, les composititions s'appauvrissent en méthanol et perdent ainsi leurs propriétés. En plus, le méthanol présente le désavantage d'être toxique et inflammable.

La demande de brevet japonais JP-A-05/168805 décrit une composition pour l'élimination de l'eau adhérant à une surface, comprenant du 1,1,1,3,3-pentafluorobutane et un surfactant constitué d'un sel d'un acide organique et d'une base organique. Ces compositions présentent une piètre aptitude au séchage.

L'invention a pour objet des compositions comprenant du 1,1,1,3,3-pentafluorobutane, présentant une bonne aptitude à l'élimination d'eau de surfaces solides, sans présenter les inconvénients sus-mentionnés des compositions connues.

L'invention concerne dès lors des compositions comprenant du 1,1,1,3,3-pentafluorobutane et au moins un agent tensioactif choisi parmi les agents tensioactifs organiques hydrophobes du type amine, du type diester d'acide carboxylique et du type ester d'acide phosphorique. On entend désigner par agents tensioactifs du type amine, des agents tensioactifs comprenant au moins un groupement amine. On entend désigner par agents tensioactifs du type diester d'acide carboxylique, des agents tensioactifs comprenant au moins deux groupements ester d'acide carboxilique. On entend désigner par agents tensioactifs du type ester d'acide phosphorique, des agents tensioactifs comprenant au moins un groupement d'ester d'acide phosphorique.

Dans le cas où, l'agent tensioactif des compositions selon l'invention est du type amine, il peut être une amine primaire, secondaire ou tertiaire, par exemple une mono-, di- ou trialkylamine dans laquelle le groupement alkyle peut être linéaire ou ramifié. Les alkylamines primaires, linéaires ou ramifiées, contenant au moins 6, de préférence au moins 8 atomes de carbone sont préférées. La 2-éthylhexylamine, l'octylamine et la nonylamine, ainsi que leurs mélanges sont particulièrement préférés.

Dans le cas où, l'agent tensioactif est du type diester d'acide carboxylique, celui-ci est avantageusement un diester aromatique. Les diesters de l'acide phtalique sont préférés. Le dioctylphtalates et le di(2-éthyl-hexyl)phtalate, ainsi que leurs mélanges sont particulièrement préférés.

Dans le cas d'un agent tensioactif du type ester d'acide phosphorique, celui-ci peut avantageusement être un triester d'acide phosphorique. Parmi les triesters d'acide phosphorique, les alkyl-, les aryl- et les alkylarylphosphates sont recommandés. Les trialkylphosphates sont particulièrement avantageux et le tributylphosphate est tout particulièrement préféré.

Dans une forme de réalisation avantageuse des compositions selon l'invention, la composition comprend (a) un agent tensioactif du type amine et (b) un agent tensioactif du type diester d'acide carboxylique ou un agent tensioactif du type ester d'acide phosphorique. De manière préférée, la composition comprend un agent tensioactif du type amine et un agent tensioactif du type ester d'acide phosphorique. D'une manière particulièrement préférée, l'agent tensioactif du type amine est l'octylamine et/ou la nonylamine et l'agent tensioactif du type ester d'acide phosphorique est le tributylphosphate. Dans cette forme de réalisation de l'invention, le rapport molaire (a) : (b) est de préférence de 0,3 : 1 à 1,5 : 1.

De préférence, les compositions de l'invention comprennent de 5 à 99,995 % en poids de 1,1,1,3,3-pentafluorobutane et de 0,005 % à 10 % en poids de l'agent tensioactif.

Dans une forme de réalisation spécialement avantageuse des compositions selon l'invention, celles-ci contiennent de 90 à 99,995 % en poids de 1,1,1,3,3-pentafluorobutane.

Les compositions selon l'invention peuvent contenir, outre les composés décrits plus haut, d'autres additifs permettant d'améliorer les performances des compositions lors de leur utilisation, tels que des stabilisants, des désémulsionnants et/ou des anti-mousses.

Les compositions selon l'invention peuvent contenir, en plus du 1,1,1,3,3-pentafluorobutane et de l'agent tensioactif, d'autres hydrocarbures, notamment des hydrocarbures halogénés. Les compositions selon l'invention peuvent notamment contenir du 1,1-dichloro-1-fluoroéthane (HCFC-141b). Des compositions conformes à l'invention sont celles comprenant de 70 à 95 % en poids de 1,1-dichloro-1-fluoroéthane et de 3 à 25 % en poids de 1,1,1,3,3-pentafluorobutane, notamment celles comprenant l'azéotrope du 1,1-dichloro-1-fluoroéthane et du 1,1,1,3,3-pentafluorobutane.

Les compositions constituées essentiellement de 1,1,1,3,3-pentafluorobutane et d'au moins un agent tensioactif sont toutefois préférées.

Les compositions selon l'invention sont des compositions liquides qui sont particulièrement bien adaptées pour déplacer de l'eau de surfaces solides. Les compositions selon l'invention satisfont aux critères les plus sévères applicables aux compositions utilisées pour éliminer de l'eau de surfaces solides par déplacement de celle-ci. Ainsi, elles sont particulièrement efficaces pour déplacer plus de 75 %, généralement au moins 99 %, voire la totalité de l'eau présente sur une surface solide. Le déplacement de l'eau est très rapide. Les compositions selon l'invention ne forment pas d'émulsion avec l'eau, mais favorisent au contraire la formation de deux phases, une phase inférieure constituée essentiellement par la composition selon l'invention dans laquelle un peu d'eau peut éventuellement être dissoute et une phase supérieure, constituée essentiellement par l'eau déplacée. Cela permet une séparation ultérieure simple entre l'eau déplacée et la composition. En outre, les compositions selon l'invention se prêtent à un grand nombre d'utilisations successives, sans que leur constitution subisse une modification sensible. L'agent tensioactif n'est en effet pas extrait significativement des compositions par l'eau qui est déplacée et séparée ultérieurement de celles-ci.

Les compositions selon l'invention conviennent pour le séchage d'une grande variété de matériaux différents. Elles conviennent notamment pour le séchage d'articles en métal, en verre, en céramique, en pierres précieuses ou en plastique.

L'invention concerne dès lors également un procédé d'élimination d'eau d'une surface solide, qui se caractérise en ce qu'on traite la surface avec une composition selon l'invention.

Le procédé selon l'invention s'applique indifféremment aux surfaces humides, aux surfaces sur lesquelles sont présentes des gouttelettes d'eau, ainsi qu'aux surfaces complètement recouvertes d'un film d'eau adhérant à la surface.

Pour traiter la surface solide avec la composition selon l'invention, on peut par exemple la soumettre à une pulvérisation, à une aspersion, à un badigeonnage par la composition ou à une immersion dans un bain de la composition. Lorsque des techniques d'immersion sont utilisées, la composition peut être agitée par tout moyen approprié et l'action de la composition peut être renforcée, par exemple par application d'ultrasons.

Le procédé selon l'invention peut être mis en oeuvre à toute température comprise entre le point de solidification de l'eau et le point d'ébullition de la composition. Le temps de traitement n'est pas critique. Pour des raisons pratiques, il est généralement conseillé de mettre la surface à traiter en contact avec la composition pendant une durée d'environ une minute, bien que des temps de traitement plus courts ou plus longs puissent être utilisés, selon les caractéristiques de la surface à traiter. En général, le temps de traitement est d'au moins 5 secondes, le plus souvent d'au moins 30 secondes. Habituellement, le temps de traitement ne dépasse pas 10 minutes. Le plus souvent, il ne dépasse pas 5 minutes.

A l'issue du traitement avec la composition, la surface solide est le plus souvent rincée au moyen d'un solvant non aqueux, mis en oeuvre sous forme liquide ou gazeuse. Du 1,1,1,3,3-pentafluorobutane peut être utilisé dans ce but.

Les exemples non limitatifs qui suivent sont donnés à titre illustratif. L'exemple 1R est donné à titre de comparaison, les exemples 2 et 3 sont réalisés selon l'invention.

### Exemple 1R

Une pièce en polyfluorure de vinylidène (PVDF) ayant une forme parallélipipédique (30 x 20 x 10 mm) et percée de 24 trous d'un diamètre de 3 mm est immergée dans de l'eau, de façon à en remplir les trous. La pièce est ensuite plongée dans un bain constitué de 1,1,1,3,3-pentafluorobutane, à l'ébullition. Après 10, 20, 30 et 60 secondes d'immersion, la pièce est sortie du bain et le nombre de trous exempts d'eau est déterminé par un examen visuel. Les résultats de ces observations sont rassemblés dans le tableau I, où la proportion de trous exempts d'eau est exprimée en pourcentage du nombre total de trous.

Le 1,1,1,3,3-pentafluorobutane se révèle totalement inefficace pour éliminer l'eau; même après une minute d'immersion, aucun trou ne peut être considéré comme sec.

### Exemple 2

La procédure de l'exemple 1R a été répétée avec un bain conforme à l'invention, constitué de 99,5 % poids de 1,1,1,3,3-pentafluorobutane, de 0,19 % poids d'octylamine et de 0,31 % poids de tributylphosphate. Les pourcentages de trous exempts d'eau sont donnés dans le tableau I.

Après une minute d'immersion, 79 % des trous peuvent être considérés comme étant exempts d'eau.

### Exemple 3

La procédure de l'exemple 1R a été répétée avec un bain conforme à l'invention, constitué de 99,96 % poids de 1,1,1,3,3-pentafluorobutane, et de 0,04 % poids de dioctylphtalate. Les pourcentages de trous exempts d'eau sont donnés dans le tableau I.

Après une minute d'immersion, l'ensemble des trous peuvent être considérés comme étant exempts d'eau.

**TABLEAU I**

| | % de trous exempts d'eau après | | | |
|---|---|---|---|---|
| | 10 s | 20 s | 30 s | 60 s |
| **Exemple 1R** | 0 | 0 | 0 | 0 |
| **Exemple 2** | 0 | 63 | 75 | 79 |
| **Exemple 3** | 29 | 63 | 79 | 100 |

## Revendications

1. Compositions comprenant du 1,1,1,3,3-pentafluorobutane et au moins un agent tensioactif, caractérisées en ce que l'agent tensioactif est choisi parmi les agents tensioactifs organiques hydrophobes du type amine, du type diester d'acide carboxylique et du type ester d'acide phosphorique.

2. Compositions selon la revendication 1, caractérisées en ce qu'elles comprennent de 5 à 99,995 % en poids de 1,1,1,3,3-pentafluorobutane et de 0,005 à 10 % en poids de l'agent tensioactif.

3. Compositions selon la revendication 2, caractérisées en ce qu'elles comprennent de 90 à 99,995 % en poids de 1,1,1,3,3-pentafluorobutane.

4. Compositions selon l'une quelconque des revendications 1 à 3, caractérisées en ce que l'agent tensioactif du type amine est choisi parmi les alkylamines primaires, contenant au moins 8 atomes de carbone.

5. Compositions selon la revendication 4, caractérisées en ce que l'alkylamine est choisie parmi l'octylamine, la 2-éthylhexylamine, la nonylamine et leurs mélanges.

6. Compositions selon l'une quelconque des revendications 1 à 3, caractérisées en ce que l'agent tensioactif organique du type diester d'acide carboxylique est un diester de l'acide phtalique.

7. Compositions selon la revendication 6, caractérisées en ce que le diester de l'acide phtalique est choisi parmi le dioctylphtalate, le di(2-éthylhexyl)phtalate et leurs mélanges.

8. Compositions selon l'une quelconque des revendications 1 à 3, caractérisées en ce que l'agent tensioactif organique du type ester d'acide phosphorique est choisi parmi les trialkylphosphates.

9. Compositions selon la revendication 8, caractérisées en ce que le trialkylphosphate est le tributylphosphate.

10. Compositions selon l'une quelconque des revendications 1 à 9, caractérisées en ce que l'agent tensioactif comprend (a) un agent tensioactif du type amine et (b) un agent tensioactif du type diester d'acide carboxylique ou un agent tensioactif du type ester d'acide phosphorique.

11. Compositions selon la revendication 10, caractérisées en ce que le rapport molaire (a) : (b) est de 0,3 : 1 à 1,5 : 1.

12. Compositions selon la revendication 10 ou 11, caractérisées en ce que l'agent tensioactif du type amine est l'octylamine et/ou la nonylamine et l'agent tensioactif du type ester d'acide phosphorique est le tributylphosphate.

13. Procédé d'élimination d'eau d'une surface solide, caractérisé en ce qu'on traite la surface avec une composition selon l'une quelconque des revendications 1 à 12.

## Patentansprüche

1. Zusammensetzungen, die 1,1,1,3,3-Pentafluorbutan und wenigstens ein Tensid umfassen, dadurch gekennzeichnet, daß das Tensid unter den hydrophoben organischen Tensiden vom Amin-Typ, vom Carbonsäurediester-Typ und vom Phosphorsäureester-Typ ausgewählt ist.

2. Zusammensetzungen gemäß Anspruch 1, dadurch gekennzeichnet, daß sie 5 bis 99,995 Gew.-% 1,1,1,3,3-Pentafluorbutan und 0,005 bis 10 Gew.-% Tensid umfassen.

3. Zusammensetzungen gemäß Anspruch 2, dadurch gekennzeichnet, daß sie 90 bis 99,995 Gew.-% 1,1,1,3,3-Pentafluorbutan umfassen.

4. Zusammensetzungen gemäß einem der Ansprüche 1 bis 3, dadurch gekennzeichnet, daß das Tensid vom Amin-Typ unter den primären Alkylaminen ausgewählt ist, die wenigstens 8 Kohlenstoffatome enthalten.

5. Zusammensetzungen gemäß Anspruch 4, dadurch gekennzeichnet, daß das Alkylamin unter Octylamin, 2-Ethylhexylamin, Nonylamin und ihren Gemischen ausgewählt ist.

6. Zusammensetzungen gemäß einem der Ansprüche 1 bis 3, dadurch gekennzeichnet, daß das organische Tansid vom Carbonsäurediester-Typ ein Phthalsäurediester ist.

7. Zusammensetzungen gemäß Anspruch 6, dadurch gekennzeichnet, daß der Phthalsäurediester unter Dioctylphthalat, Di-(2-ethylhexyl)-phthalat und ihren Gemischen ausgewählt ist.

8. Zusammensetzungen gemäß einem der Ansprüche 1 bis 3, dadurch gekennzeichnet, daß das organische Tensid vom Phosphorsäureester-Typ unter den Trialkylphosphaten ausgewählt ist.

9. Zusammensetzungen gemäß Anspruch 8, dadurch gekennzeichnet, daß das Trialkylphosphat Tributylphosphat ist.

10. Zusammensetzungen gemäß einem der Ansprüche 1 bis 9, dadurch gekennzeichnet, daß das Tensid (a) ein Tensid vom Amin-Typ und (b) ein Tensid vom Carbonsäurediester-Typ oder ein Tensid vom Phosphorsäureester-Typ umfaßt.

11. Zusammensetzungen gemäß Anspruch 10, dadurch gekennzeichnet, daß das Molverhältnis (a): (b) 0,3 : 1 bis 1,5 : 1 beträgt.

12. Zusammensetzungen gemäß Anspruch 10 oder 11, dadurch gekennzeichnet, daß das Tensid vom Amin-Typ Octylamin und/oder Nonylamin ist und das Tensid vom Phosphorsäureester-Typ Tributylphosphat ist.

13. Verfahren zur Wasserentfernung von einer festen Oberfläche, dadurch gekennzeichnet, daß man die Oberfläche mit einer Zusammensetzung gemäß einem der Ansprüche 1 bis 12 behandelt.

## Claims

1. Compositions including 1,1,1,3,3-pentafluorobutane and at least one surface-active agent, characterized in that the surface-active agent is chosen from hydrophobic organic surface-active agents of the amine type, of the carboxylic acid diester type and of the phosphoric acid ester type.

2. Compositions according to Claim 1, characterized in that they include from 5 to 99.995 % by weight of 1,1,1,3,3-pentafluorobutane and from 0.005 to 10 % by weight of the surface-active agent.

3. Compositions according to Claim 2, characterized in that they include from 90 to 99.995 % by weight of 1,1,1,3,3-pentafluorobutane.

4. Compositions according to any one of Claims 1 to 3, characterized in that the surface-active agent of the amine type is chosen from primary alkylamines containing at least 8 carbon atoms.

5. Compositions according to Claim 4, characterized in that the alkylamine is chosen from octylamine, 2-ethylhexylamine, nonylamine and their mixtures.

6. Compositions according to any one of Claims 1 to 3, characterized in that the organic surface-active agent of the carboxylic acid diester type is a diester of phthalic acid.

7. Compositions according to Claim 6, characterized in that the diester of phthalic acid is chosen from dioctyl phthalate, di(2-ethylhexyl)phthalate and their mixtures.

8. Compositions according to any one of Claims 1 to 3, characterized in that the organic surface-active agent of the phosphoric acid ester type is chosen from trialkylphosphates.

9. Compositions according to Claim 8, characterized in that the trialkyl phosphate is tributyl phosphate.

10. Compositions according to any one of Claims 1 to 9, characterized in that the surface-active agent includes (a) a surface-active agent of the amine type and (b) a surface-active agent of the carboxylic acid diester type or a surface-active agent of the phosphoric acid ester type.

11. Compositions according to Claim 10, characterized in that the molar ratio (a) : (b) is from 0.3 : 1 to 1.5 : 1.

12. Compositions according to Claim 10 or 11, characterized in that the surface-active agent of the amine type is octylamine and/or nonylamine and the surface-active agent of the phosphoric acid ester type is tributyl phosphate.

13. Process for removing water from a solid surface, characterized in that the surface is treated with a composition according to any one of Claims 1 to 12.
